# EUROPEAN PATENT APPLICATION

(11) **EP 3 896 941 A1**
(43) Date of publication of application: **20.10.2021**
(21) Application number: 19903272.3
(22) Date of filing: 24.12.2019
(51) Int. Cl.: H04L 29/08

(54) **MAIN CHAIN AND PARALLEL CHAIN ARCHITECTURE SYSTEM, BLOCK SYNCHRONIZATION METHOD, DEVICE, AND STORAGE MEDIUM**

(30) Priority: 29.12.2018 CN 201811637779
(71) Applicant: Hangzhou Fuzamei Technology Co. Ltd, HangZhou, Zhejiang 310000 (CN)
(72) Inventor: MA, Dengji, Hangzhou, Zhejiang 310000 (CN); WU, Sijin, Hangzhou, Zhejiang 310000 (CN); WANG, Zhiwen, Hangzhou, Zhejiang 310000 (CN)
(74) Representative: Miao, Tianhao
(86) International application number: PCT/CN2019/127998
(87) International publication number: WO 2020/135435

(57) **Abstract**

Provided are a main chain and parallel chain architecture system, a block synchronization method, a device, and a storage medium. The system comprises: a main chain system, a load balancing system and a parallel chain system, wherein the load balancing system is used for configuring a fixed first access address and first port for each main chain node of the main chain system, and the first access address and the first port are used for each parallel chain node of the parallel chain system to access each main chain node; and the load balancing system is further used for automatically switching, when a first main chain node accessed by a first parallel chain node cannot be accessed, the first main chain node to an accessible second main chain node for the first parallel chain node. In the present invention, several main chain nodes are configured for one parallel chain node by a load balancing system, such that when one of the main chain nodes crashes, the main chain node can be quickly switched to another main chain node, the port and the access address do not change, and so a parallel chain node can continue operating when no configuration is modified, thus greatly improving the working efficiency.

## Description

### BACKGROUND OF THE PRESENT INVENTION

### FIELD OF INVENTION

The present invention relates to the technical field of blockchain, and in particular, to main chain and parallel chain architecture system, block synchronization method, device, and storage medium.

### DESCRIPTION OF RELATED ARTS

In current main chain-parallel chain mechanisms, the parallel chain nodes are disposed in the corresponding main chain nodes and in the same inner network with the main chain node. Therefore, the main chain nodes may only communicate with the corresponding main chain nodes, while the parallel chain nodes do not communicate with each other. Although such arrangement of one parallel chain node correspond to one main chain node can increase the accuracy of the block synchronization of the parallel chain and the main chain, if a main chain node is down, the corresponding parallel chain node will be down, rendering resource waste and the working efficiency reducing.

### SUMMARY OF THE PRESENT INVENTION

In accordance of the defects or drawbacks of the conventional technologies, the present invention aims to provide a safe and reliable main chain and parallel chain architecture system, block synchronization method, device, and storage medium.

In a first aspect, the present invention provides a main chain and parallel chain architecture system, including main chain system, load balancing system, and parallel chain system.

The load balancing system is used for configuring a fixed first access address and first port for each main chain node of the main chain system, and the first access address and the first port are used for each parallel chain node of the parallel chain system to access each main chain node through the load balancing system.

The load balancing system is further utilized for automatically switching, when a first main chain node accessed by a first parallel chain node cannot be accessed, the first main chain node to an accessible second main chain node for the first parallel chain node.

Further, the load balancing system is also utilized for configuring a fixed second access address and second port for each parallel chain node, wherein the second access address and the second port are utilized for the clients to indirectly visit each parallel chain node through the load balancing system.

Further, the main chain and parallel chain architecture system is disposed on a cloud server.

In a second aspect, the present invention provides a block synchronization method, which may be applied for parallel chain node(s) of a parallel chain system of a main chain and parallel chain architecture system.
acquiring the parent hash value of the first block of the main chain, wherein the first block is the next block of the main chain block corresponding to the latest block of the parallel chain of the current node;
determining if the parent hash value identical to the block hash of the corresponding main chain block recorded in the latest block of the parallel chain:
   if yes, conducting parallel chain block synchronization based on the first block;
   if no, fallbacking and searching the second block of the parallel chain through the fallback algorithm, wherein the block hash of the corresponding main chain block recorded by the second block is the same as the parent hash value of the third block of the main chain; and
   deleting the parallel chain block after the second block and conducting parallel chain block synchronization according to the third block and subsequent main chain block.

Further, fallbacking and searching the block on the main chain through the fallback algorithm comprises: configuring the block scope for the fallbacking and searching, wherein the fallbacking method comprises:
if the second block has not been found within the block scope, reconfiguring the block scope.

Further, the method also comprises:
if the second block has still not been found when fallbacking to the genesis block of the parallel chain, deleting all blocks of the parallel chain and conducting parallel chain block synchronization based on the blocks of the main chain.

In a three aspect, the present invention also provides a device, which includes one or more processors and a storage, wherein the storage includes commands executable by the one or more processors to allow the one or more processors to perform block synchronization methods provided in accordance with embodiments of the present invention.

In a fourth aspect, the present invention also provides a storage medium with computer program stored therein, so as for allowing a computer to perform a block synchronization method provided in accordance with the embodiments of the present invention.

According to various embodiments of the present invention, several main chain nodes are configured for one parallel chain node by a load balancing system, such that when one of the main chain nodes crashes, the main chain node can be quickly switched to another main chain node, the port and the access address do not change, and so a parallel chain node can continue operating when no configuration is modified, thus greatly improving the working efficiency.

According to various embodiments of the present invention, a block synchronization method, through synchronizing the block on the main chain of the main chain node, records the block hash of the block to compare the block hash with the parent hash of the next block to be synchronized, so as to allow fast and accurate block synchronization for the main chain and parallel chain architecture system, even after switching of the main chain node.

### BRIEF DESCRIPTION OF THE DRAWINGS

Other features, objects, and advantages of the present application will become more obvious through referring to the detail descriptions of the embodiments that are illustrated in, but not limited by the following figures.
Fig. 1 is a composition diagram of a main chain and parallel chain architecture system according to an embodiment of the present invention.
FIG. 2 is a composition diagram of a preferred embodiment of the system of FIG. 1.
FIG. 3 is a flow diagram of a block synchronization method according to the present invention.
FIG. 4 is an application scenario view of a preferred embodiment of the method of FIG. 3.
FIG. 5 is a flow diagram of a preferred embodiment of the method of FIG. 3.
FIG. 6 is a composition diagram of a device according to an embodiment of the present invention.

### DETAILED DESCRIPTION OF THE PREFERRED EMBODIMENT

The present application is described in further detail below in connection with the accompanying drawings and embodiments. It is to be understood that the specific embodiments described herein are for illustrative purposes only and shall not limit the present invention. It is also to be noted that, for ease of description, only portions that are relevant to the present invention to be described are shown in the accompanying drawings.

It should be noted that, without conflict, features in the present application and features in the embodiments may be combined with each other. The present application will now be described in detail with reference to the accompanying drawings.

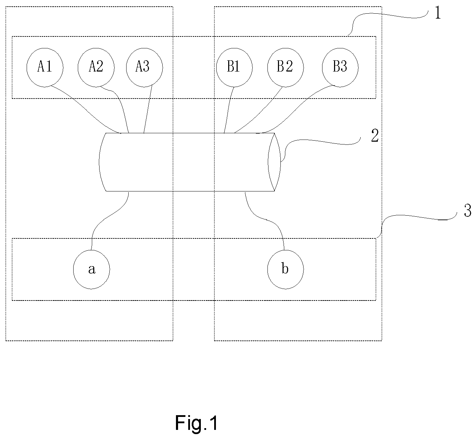

Fig. 1 is a composition diagram of a main chain and parallel chain architecture system according to an embodiment of the present invention.

Referring to Fig. 1, according to this embodiment, the present invention provides a main chain and parallel chain architecture system, including a main chain system 1, a load balancing system 2, and a parallel chain system 3.

The load balancing system 2 is used for configuring a fixed first access address and first port for each main chain node of the main chain system 1, and the first access address and the first port are used for each parallel chain node of the parallel chain system to access each main chain node through the load balancing system.

The load balancing system 2 is further utilized for automatically switching, when a first main chain node accessed by a first parallel chain node cannot be accessed, the first main chain node to an accessible second main chain node for the first parallel chain node.

Specifically, as illustrated in Fig. 1, in the main chain and parallel chain architecture system, the load balancing system 2 provides three main chain nodes A1, A2, and A3 for the parallel chain node a. Namely, the load balancing system 2 disposes an access address IP1 and port d1 for A1 to be connected with the load balancing system 2, disposes an access address IP2 and port d2 for A2 to be connected with the load balancing system 2, and disposes an access address IP3 and port d3 for A3 to be connected with the load balancing system 2. Besides, the load balancing system 2 also disposes an access address IP4 and port d4 for the parallel chain node a, so as to allow the parallel chain node to be connected with the load balancing system and eventually allow the parallel chain node to acquire relative data and information of the main chain node through the load balancing system. When the main chain node (e.g. the main chain node A1) currently connected with a crashes, the load balancing system 2 will automatically switch to any of the normally functioning node (e.g. A2) among A2 and A3 for the parallel chain node a. At this moment, the access address and port connected with the load balancing system will be changed into IP2 and port d2, but the parallel chain node can still acquire relative data and information of the main chain node A2 through IP4 and port d4 without requiring shutdown, resetting, and reconnection, which greatly enhances working efficiency.

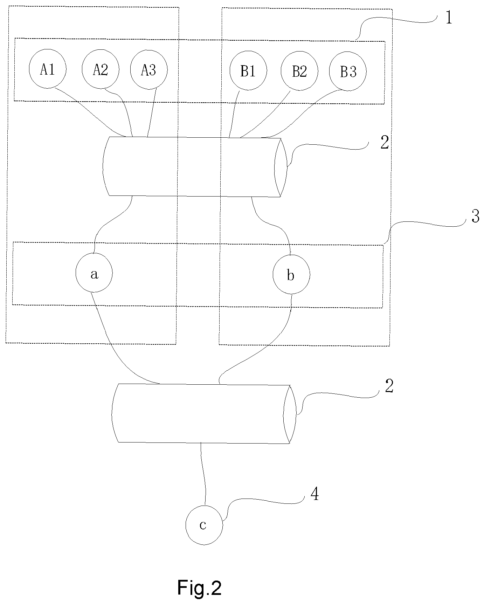

FIG. 2 is a composition diagram of a preferred embodiment of the system of FIG. 1. Referring to Fig. 2, according to a preferred embodiment, the load balancing system is also utilized for configuring a fixed second access address and second port for each parallel chain node, wherein the second access address and the second port are utilized for the clients to indirectly visit each parallel chain node through the load balancing system.

Specifically, the load balancing system 2 also provides a plurality of parallel chain nodes for the client 4, wherein the disposition principles are similar to which have been illustrated in Fig. 1, which will not be mentioned repetitively. According to the present embodiment, the main chain and parallel chain architecture system allows the load balancing system to switch to any normal parallel chain node for the clients when a parallel chain node has a problem, so that the client may still conduct activities, such as constructing transactions, sending transactions, checking transactions, and etc., without being affected.

According to a preferred embodiment, the main chain and parallel chain architecture system is disposed on a cloud server. According to more embodiments, the above main chain and parallel chain architecture system may also be disposed on any extranet to perform the above functions through the load balancing system.

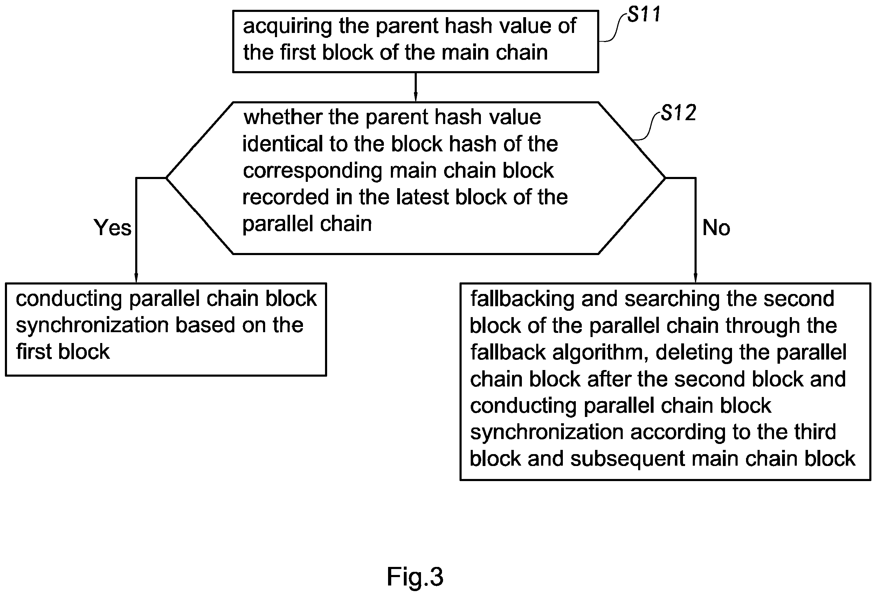

FIG. 3 is a flow diagram of a block synchronization method according to the present invention. Referring to Fig. 3, according to a preferred embodiment, it provides a block synchronization method, which may be applied for parallel chain node(s) of a parallel chain system of a main chain and parallel chain architecture system.
S11. acquiring the parent hash value of the first block of the main chain, wherein the first block is the next block of the main chain block corresponding to the latest block of the parallel chain of the current node;
S12. determining if the parent hash value identical to the block hash of the corresponding main chain block recorded in the latest block of the parallel chain:
   if yes, conducting parallel chain block synchronization based on the first block;
   if no, fallbacking and searching the second block of the parallel chain through the fallback algorithm, wherein the block hash of the corresponding main chain block recorded by the second block is the same as the parent hash value of the third block of the main chain; and
   deleting the parallel chain block after the second block and conducting parallel chain block synchronization according to the third block and subsequent main chain block.

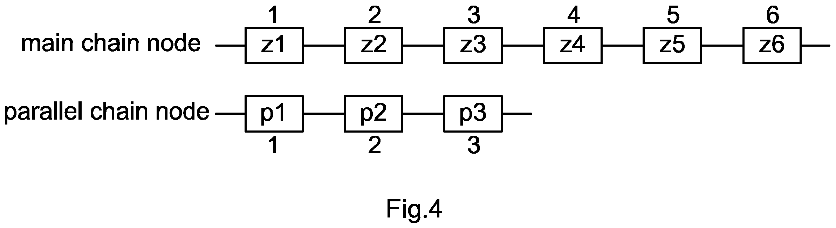

Specifically, as illustrated in Fig. 4, the block p3 is the latest block with the height of 3 on the parallel chain of the current parallel chain node. The block records the block hash ("hash") of the synchronized corresponding main chain block z3 (which is the block with the height of 3 on the main chain), requests to acquire the parent hash value ("fhash") of the block z4, which is the first block with the height of 4, from the main chain, and determines if "hash" is identical to "fhash." If yes, conducting parallel chain synchronization based on the first block; If no, it will, through the fallback algorithm, fallback to the block p2 of the parallel chain, delete the block p3, and continue to execute the above processes, which are to acquire the parent hash of the block z3, comparing the parent hash to the block hash of the block z2 recorded in the block p2, and conduct blockchain synchronization based on the block z3 if consistent or keep fallbacking to the block p1, wherein the subsequent method is the same as the above mentioned method, which would not repetitively illustrated here. The process will continue until a block with the first block hash identical to the parent hash.

According to the present embodiment, after it determines that the parent hash value is identical to the block hash recorded by the latest block of the parallel chain on the corresponding main chain block, it will recognize that the data recorded by the main chain is reliable and conduct parallel chain block synchronization based on the main chain no matter if the main chain where the main chain node is on is the one being switched to. In other words, in the main chain and parallel chain architecture system, even if a main chain node has gone wrong and been switched, the parallel chain can still synchronize the data of the main chain.

Further and preferably, when fallbacking and searching the block on the main chain through the fallback algorithm, configuring the block scope for the fallbacking and searching, wherein the fallbacking method comprises:
if the second block has not been found within the block scope, reconfiguring the block scope. Specifically, during the process of the fallbacking of the parallel chain node, a block scope can be configured, such as configuring the depth of the fallbacking of the searching, so that it performs the fallback within the depth of fallbacking, while if it exceeds this depth of fallbacking, the depth of fallbacking may also be reconfigured.

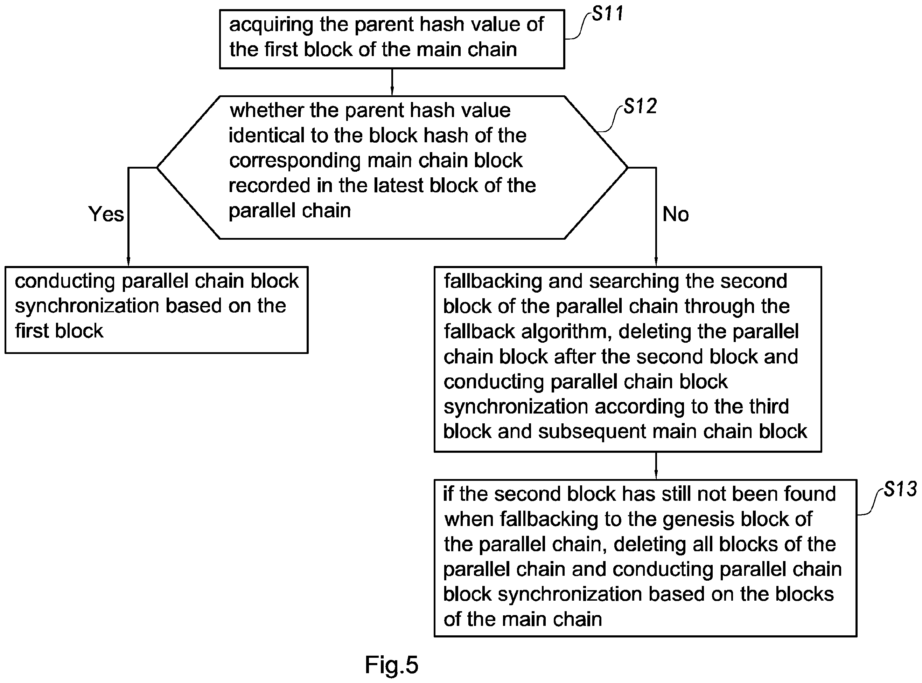

FIG. 5 is a flow diagram of a preferred embodiment of the method of FIG. 3. Referring to Fig. 5, according to a preferred embodiment, the above method also comprises the following step:
S13. if the second block has still not been found when fallbacking to the genesis block of the parallel chain, deleting all blocks of the parallel chain and conducting parallel chain block synchronization based on the blocks of the main chain.

Specifically, if the parallel chain node has still not found the second block after fallbacking to the genesis block of the parallel chain, it indicates that the block hash recorded by the genesis block is different from the parent hash value of the next block of the corresponding main chain block. Therefore, it deletes the genesis block and synchronizes the block data on the main chain again.

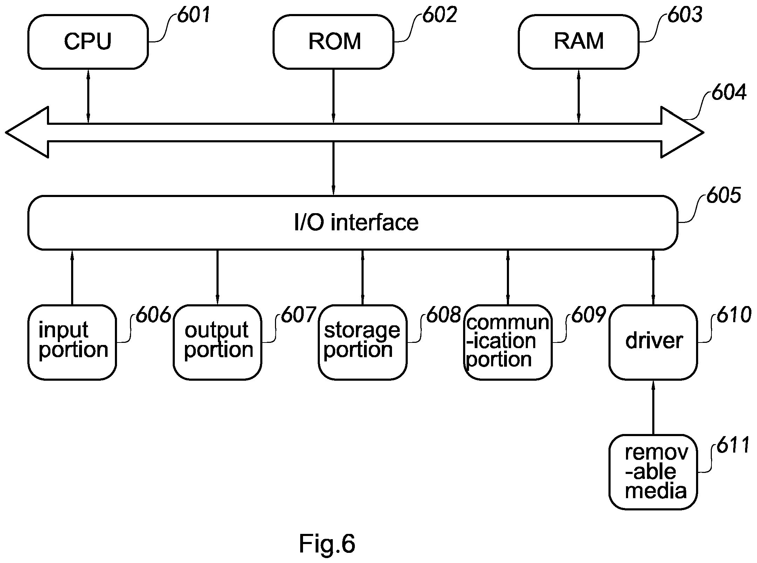

FIG. 6 is a composition diagram of a device according to an embodiment of the present invention.

Referring to Fig. 6, in another aspect, the present application also provides a device 600, which includes one or more central processing units (CPUs) 601 that can perform various suitable actions and processes in accordance with a program stored in a read-only memory (ROM) 602 or a program loaded into a random access memory (RAM) 603 from a storage portion 608. Various programs and data required for the operation of the device 600 are also stored in the RAM 603. The CPU 601, the ROM 602, and the RAM 603 are connected to each other via a bus 604. An input/output (I/O) interface 605 is also connected to the bus 604.

The following components are connected to the I/O interface 605: an input portion 606 including a keyboard, a mouse, and etc.; an output portion 607 including a cathode ray tube (CRT), a liquid crystal display (LCD), and etc., and a speaker and etc.; a storage portion 608 including a hard disk or the like; and a communication portion 609 including a network interface card, such as a LAN card, a modem, and etc. The communication portion 609 performs communication process via a network, such as the Internet. A driver 610 is also connected to the I/O interface 605 based on the needs. A removable media 611, such as magnetic disks, optical disks, magneto-optical disks, semiconductor memories, and etc., is mounted on the driver 610 based on the needs so that the computer programs read therefrom can be installed into the storage portion 608 as needed.

In particular, according to the embodiments of the present invention, the block synchronization method described in any of the above embodiments may be implemented as the computer program. For example, an embodiment of the present invention may provide a computer program product, which includes a computer program tangibly loaded on a machine-readable medium containing program code for performing a block synchronization method. According to such embodiment, the computer program may be downloaded and installed from the network through the communication portion 609 and/or installed from the removable medium 611.

As yet another aspect, the present application also provides a computer-readable storage medium, which may be a computer-readable storage medium included in a device of the above-described embodiments, or a computer-readable storage medium that may be provided separately, without being assembled in the device. The computer-readable storage medium stores one or more programs that are utilized by one or more processors to perform a block synchronization method disclosed in the present application.

The flow chart and block diagrams in the figures illustrate the constructions, functionality, and operation of possible implementations of the systems, methods, and computer program products according to various embodiments of the present invention. In this regard, each block in the flow chart or block diagrams may represent a module, segment, or portion of code, which includes one or more executable instructions for implementing the specified logical function (s). It should also be noted that, in some alternative implementations, the functions illustrated in the block may occur out of the order illustrated in the figures. For example, two blocks represented in succession may, in fact, be executed substantially concurrently, or the blocks may sometimes be executed in the reverse order, depending upon the functionality involved. It will also be noted that each block of the block diagrams and/or flow chart illustration, and combinations of the blocks in the block diagrams and/or flow chart illustration, may be implemented by special purpose hardware-based systems that perform the specified functions or acts, or combinations of special purpose hardware and computer instructions.

The units or modules described in the embodiments of the present application may be implemented in a software manner, or may be implemented in a hardware manner. The described units or modules may also be provided in a processor, for example, each of which may be a software program disposed in a computer or a mobile smart device or a separately configured hardware device. The names of these units or modules, in some cases, do not constitute a definition of the unit or module itself.

The above description is merely preferred embodiment(s) of the present application and is intended to be illustrative of the principles of the application. It should be understood by those skilled in the art that the scope of the present invention referred to herein is not limited to the particular combination of the above-described technical features, but also to other technical solutions formed by any combination of the above-described technical features or the equivalent features thereof without departing from the concepts of the present application. For example, technical solutions that are formed through alternating or interchanging the features described above and the technical features disclosed in this application (but are not limited to) with similar feature(s).

## Claims

1. A main chain and parallel chain architecture system, comprising a main chain system, a load balancing system, and a parallel chain system, wherein
said load balancing system is utilized for configuring a fixed first access address and first port for each main chain node of said main chain system, and said first access address, wherein said first port are utilized for each parallel chain node of said parallel chain system to access each main chain node through said load balancing system, wherein
said load balancing system is further utilized for automatically switching, when a first main chain node accessed by a first parallel chain node cannot be accessed, said first main chain node to an accessible second main chain node for said first parallel chain node.

2. The main chain and parallel chain architecture system, as recited in claim 1, wherein the load balancing system is also utilized for configuring a fixed second access address and second port for each parallel chain node, wherein the second access address and the second port are utilized for the clients to indirectly visit each parallel chain node through the load balancing system.

3. The main chain and parallel chain architecture system, as recited in any of claims 1-2, wherein the main chain and parallel chain architecture system is disposed on a cloud server.

4. A block synchronization method, applied for parallel chain node on the parallel chain system of the main chain and parallel chain architecture system, as recited in any of claims 1-3, wherein the method comprises:
acquiring the parent hash value of the first block of the main chain, wherein the first block is the next block of the main chain block corresponding to the latest block of the parallel chain of the current node;
determining if the parent hash value identical to the block hash of the corresponding main chain block recorded in the latest block of the parallel chain:
if yes, conducting parallel chain block synchronization based on the first block;
if no, fallbacking and searching the second block of the parallel chain through the fallback algorithm, wherein the block hash of the corresponding main chain block recorded by the second block is the same as the parent hash value of the third block of the main chain; and
deleting the parallel chain block after the second block and conducting parallel chain block synchronization according to the third block and subsequent main chain block.

5. The method, as recited in claim 4, wherein the step of fallbacking and searching the block on the main chain through the fallback algorithm comprises configuring the block scope for the fallbacking and searching, wherein the fallbacking method comprises:
if the second block has not been found within the block scope, reconfiguring the block scope.

6. The method, as recited in claim 5, wherein said method also comprising the following steps:
if the second block has still not been found when fallbacking to the genesis block of the parallel chain, deleting all blocks of the parallel chain and conducting parallel chain block synchronization based on the blocks of the main chain.

7. A device for block synchronization method, comprising:
one or more processor;
a storage, adapted for storing one or more program, wherein
when said one or more program was executed by said one or more processor, said one or more processor is allowed to execute the method, as recited in any of the claims 4-6.

8. A storage medium with program stored therein, wherein said program is executed by a processor so as to perform the method, as recited in any of the claims 4-6.
